# EUROPEAN PATENT APPLICATION

(11) **EP 1 429 279 A2**
(43) Date of publication of application: **16.06.2004**
(21) Application number: 03028253.7
(22) Date of filing: 09.12.2003
(51) Int. Cl.: G06K 9/00

(54) **Face recognition method, face recognition apparatus, face extraction method and image pickup apparatus**

(30) Priority: 12.12.2002 JP 2002360611; 12.11.2003 JP 2003382519
(71) Applicant: FUJI PHOTO FILM CO., LTD., Kanagawa-ken, 250-0193 (JP)
(72) Inventor: Kaku, Toshihiko, Fuji Photo Film Co., Ltd., Ashigarakami-gun Kanagawa 258-8538 (JP)
(74) Representative: Klunker . Schmitt-Nilson . Hirsch

(57) **Abstract**

To provide a face recognition method and apparatus for more accurately recognizing face portions contained in an image, face extraction method for extracting the recognized faces, and image pickup apparatus. A subject is photographed with a camera whose incidence of defects such as red-eye or other eye color change has been increased intentionally by designing the flash unit and lens to be extremely close to each other, and so on. Discolored eye portions are detected in a photographic image and the faces of people contained in the photographic image are recognized based on the discolored eye portions. The discolored eye portions in the photographic image are corrected and the recognized face portions are extracted from the corrected photographic image. This makes it possible to generate corrected facial images more accurately.

## Description

### BACKGROUND OF THE INVENTION

### Field of the Invention

The present invention relates to a face recognition method and face recognition apparatus for recognizing the face portions of people contained in an image, face extraction method for extracting the recognized face portions, and image pickup apparatus.

### Description of the Related Art

With the spread of digital cameras, it has become popular to handle photographic images in digital format. Photographic images recorded on a film are inconvenient. For example, they are bulky to store. Also, to have them printed, the user must normally take the film to a photo shop. In contrast, digital photographic images are advantageous in that they are not bulky to store because they can be recorded together on an FD or the like and that they can be printed anytime using a personal computer and printer. Another advantage of digital photographic images is that it is possible to perform desired image processing and correct defects in photographic images using a personal computer and the like. The image processing described above includes the process of correcting red-eye or gold-eye in which a flash reflected by the retina at the back of the eyeballs causes the pupils to look red or gold during flash photography, process of correcting closed eyes caused by a flash, process of making corrections to obtain a desired sky color or skin tone, process of gradation correction, etc. By performing such image processing on digital photographic images, it is possible to obtain more desirable images (e.g., Patent Document 1 and Patent Document 2).

Recently, it has become accepted practice to extract face portions of individuals from a photographic image by performing predetermined image processing on photographic image data of a group photograph, prepare image data of the extracted face portions, and produce personal photographs based on the image data.

### [Patent Document 1]

Japanese Patent Laid-Open No. 10-233929

### [Patent Document 2]

Japanese Patent Laid-Open No. 11-127371

To generate image data of personal photographs from photographic image data of a group photograph, a facial part (hereinafter referred to as a landmark part) which will serve as a landmark is detected, face portions in the photographic image is recognized based on the landmark part, and image data of the face images corresponding to the recognized face portions extracted from the photographic image is generated.

When extracting two or more face portions from a photographic image, if the landmark part is the eye and if the landmark part varies greatly among the face portions due to red-eye or closed eyes in the photographic image, it is difficult to detect landmark parts. Consequently, the landmark parts cannot be detected reliably and there is a fear that some face portions will not be recognized. Furthermore, cameras have become increasingly smaller recently, making it impossible to allow enough space between their flash unit and lens. This increases cases of red-eye or gold-eye, making it increasingly difficult to detect eyes in photographic images accurately.

### SUMMARY OF THE INVENTION

In view of the above circumstances, the present invention has an object to provide a face recognition method and apparatus for accurately recognizing face portions contained in an image, face extraction method for extracting the recognized face portions, and image pickup apparatus.

The present invention has been made in view of the above circumstances and provides a face recognition method and apparatus, a face extraction method, and a image pickup apparatus achieving the above object.

The present invention provides a face recognition method for recognizing face portions in an image based on image data of the image, having:
a detection step of detecting, in the image, eye portions which have undergone a predetermined color change, based on the image data; and
a recognition step of recognizing face portions in the image based on the eye portions detected in the detection step.

Face recognition methods are known which involve detecting eyes in a photographic image and recognizing face portions in the photographic image based on the detected eyes. To detect eyes in a photographic image, it is common practice to detect image parts which represent general colors (dark or blue) and shape (round) of eyes in photographic images. However, if red-eye or gold-eye occurs in the photographic image, it is difficult to detect all the eyes in the photographic image accurately. Consequently, there is a fear that some face portions will not be recognized.

Incidentally, cameras have become increasingly smaller recently, making it impossible to allow enough space between their flash unit and lens, and thus, resulting in an increase in cases of red-eye or gold-eye. With the increase in eye color changes, the recognition rate is getting lower and lower when face recognition is based on the eyes in photographic images as with the above example. In contrast, the face recognition method according to the present invention recognizes face portions in the recognition step based on discolored eye portions detected in the detection step. Although it is difficult to avoid eye color changes, it is easy to change eye color intentionally, and thus the face recognition method according to the present invention can recognize face portions easily with high accuracy using a photographic image in which eye color has been changed intentionally.

In the face recognition method of the present invention, preferably the detection step detects red-eye portions in the image.

When photographing a subject, bringing the flash unit and lens of the camera extremely close to each other increases the incidence of red-eye, in particular. Red-eye detection in photographic images has been practiced widely, accumulating a wealth of expertise, based on which red eyes can be detected accurately. Thus, if a subject is photographed with a camera designed to be prone to red-eye, face portions can be recognized more accurately and efficiently by detecting red eyes in photographic images.

Also, the present invention provides a face extraction method for extracting face portions from an image and generating facial images based on image data of the image, having:
a detection step of detecting red-eye portions in the image, based on the image data;
a recognition step of recognizing face portions in the image based on the red-eye portions detected in the detection step;
a correction step of correcting the red-eye portions detected in the detection step; and
a face image generating step of generating facial images by extracting, from the image, the face portions which have been recognized in the recognition step and whose red-eye portions have been corrected in the correction step.

It is common practice to recognize face portions of individuals in a photographic image of a group photograph and generate a personal photograph by extracting the face portions. In doing that, face portions can be recognized using a method of recognizing face portions based on red-eye portions in the photographic image as with the face recognition method described above, and then facial images can be generated accurately and efficiently by extracting the recognized face portions.

Also, the present invention provides a face extraction method for extracting face portions from an image and generating facial images based on image data of the image, having:
a detection step of detecting, in the image, eye portions which have undergone a predetermined color change, based on the image data;
a recognition step of recognizing face portions in the photographic image based on the eye portions detected in the detection step;
a correction step of correcting the color change in the eye portions detected in the detection step; and
a face image generating step of generating facial images by extracting, from the image, the face portions which have been recognized in the recognition step and whose color change has been corrected in the correction step.

The face extraction method according to the present invention may recognize face portions based on eye color change such as red-eye or gold-eye, extract the recognized face portions, and generate facial images. Red-eye is produced intentionally because red-eye is easier to produce than other eye color changes. By recognizing face portions based on red-eye, it is possible to recognize face portions with higher accuracy and generate face portions accurately.

Also, the present invention provides a face recognition apparatus which recognizes face portions in an image based on image data of the image, having:
a detection section which detects, in the image, eyes which have undergone a predetermined color change, based on the image data; and
a recognition section which recognizes face portions in the image based on the eyes detected by the detection section.

The face recognition apparatus of the present invention can more accurately recognize face portions contained in an image photographed, for example, by a camera which is prone to red-eye and gold-eye because its flash unit and lens are located extremely close to each other.

Also, the present invention provides an image pickup apparatus which photographs a subject and generates photographic image data of a photographic image, having:
a detection section that detects, in the photographic image, eye portions which have undergone a predetermined color change, based on the image data;
a recognition section that recognizes face portions in the photographic image based on the eye portions detected by the detection section;
a correction section that corrects the color change in the eye portions detected by the detection section; and
a face image generating section that generates facial images by extracting, from the photographic image, the face portions which have been recognized by the recognition section and whose color change has been corrected by the correction section.

The image pickup apparatus of the present invention, which increases the incidence of eye color change, etc. by designing the flash unit and lens to be extremely close to each other, and so on, can detect, in the photographic image, eye portions which have undergone a color change, extract the face portions which have been recognized based on the eye color change, and generate facial images more accurately.

Furthermore, in the image pickup apparatus according to the present invention, preferably the detection section detects red-eye portions in the image and the correction section corrects the red-eye portions detected by the detection section.

As described above, the present invention provides a face recognition method and apparatus for accurately recognizing face portions contained in an image, face extraction method for extracting the recognized face portions, and image pickup apparatus that obtains a photographic image by photographing a subject and accurately recognizes face portions of people contained in the obtained photographic image.

### BRIEF DESCRIPTION OF THE DRAWINGS

Preferred embodiments of the present invention will be described in detail based on the following figures, wherein:
FIG. 1 is an external view showing a digital camera according to a first embodiment of the present invention;
FIG. 2 is a block diagram of the digital camera;
FIG. 3 is a functional block diagram showing a face recognition process and face extraction process of an image processor;
FIG. 4 is a flowchart showing a sequence of processes performed by the image processor to acquire a photographic image and record the acquired photographic image in the image storage memory shown in FIG. 2;
FIG. 5 is a diagram showing a photographic image which corresponds to photographic image data inputted in a detection function;
FIG. 6 is a diagram showing detection results of red eyes contained in the photographic image;
FIG. 7 is a diagram showing results produced by recognizing the faces of people contained in the photographic image based on the red-eye detection results;
FIG. 8 is a diagram showing a corrected photographic image obtained by correcting the red eyes contained in the photographic image based on the red-eye detection results;
FIG. 9 is a diagram showing facial images obtained by extracting image parts of faces from the corrected photographic image based on the results obtained by recognizing the faces.
FIG. 10 is a flowchart showing a sequence of photographing processes performed by a digital camera according to a second embodiment of the present invention;
FIG. 11 is a functional block diagram showing an identification system to which a third embodiment of the present invention is applied; and
FIG. 12 is a flowchart showing a sequence of processes of identifying a person being photographed, based on a photographic image taken by an image pickup apparatus.

### DETAILED DESCRIPTION OF THE PREFERRED EMBODIMENTS

Eembodiments of the present invention will be described below.

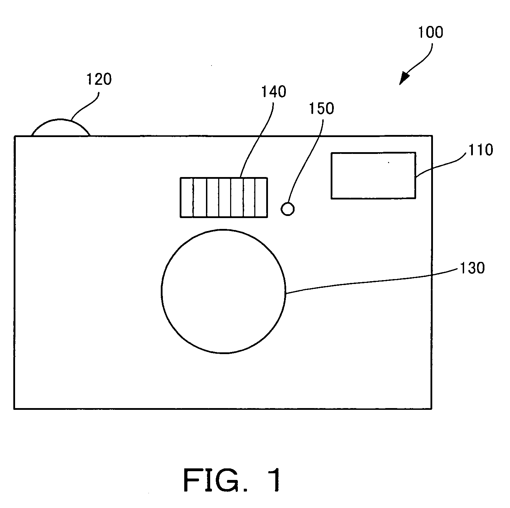

FIG. 1 is an external view showing a digital camera 100 according to a first embodiment of the present invention.

In outward appearance, on the front face of the digital camera 100, there are a shutter button 120 which is pressed to take a photograph; a flash unit 140 which emits light in synchronization with the press of the shutter button 120; a flash sensor 150 which measures the quantity of light emitted from the flash unit 140; a viewfinder 110 which the photographer looks into to confirm the position and the like of a subject; and a taking lens 130 composed of a focus lens used to focus on a subject, a zoom lens used to change the field of view, etc. The shutter button 120 can be pressed in two stages: full press and half press. When the shutter button 120 is half pressed, a motor attached to the focus lens in the taking lens 130 is operated in the direction along the optical axis to focus on the central area of the field of view and the focus is locked to maintain the position of the focus lens until the subject image is read (exposure). When the shutter button 120 is fully pressed, the shutter is released to actually take a photograph. Besides, the flash unit 140 is designed to be extremely close to the taking lens 130 to produce red-eye intentionally.

Now, an internal structure of the digital camera 100 will be described.

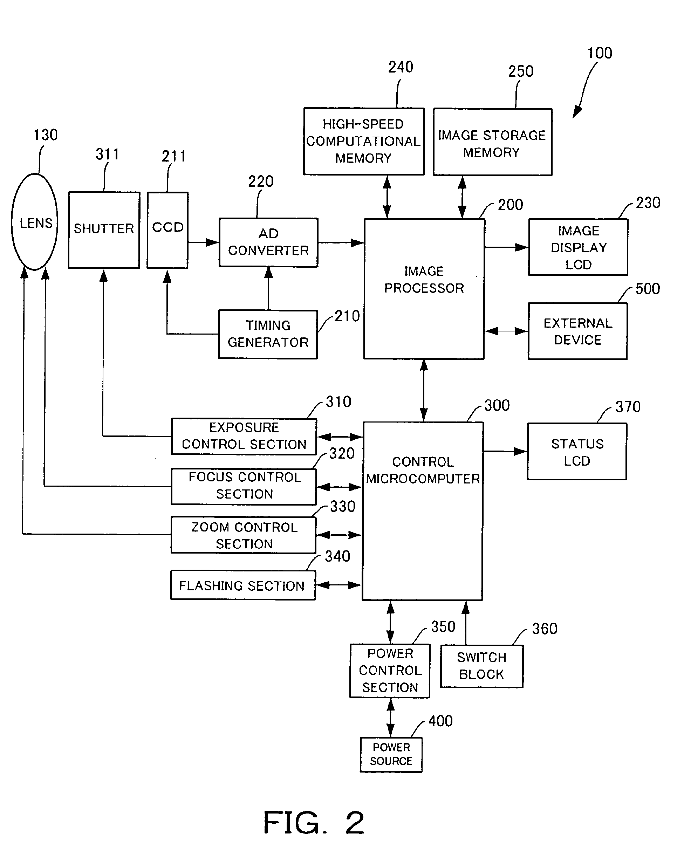

FIG. 2 is a block diagram of the digital camera 100.

The digital camera 100 is equipped with an image processor 200, a timing generator 210, CCD (Charge Coupled Device) 211, AD (Analog-Digital) converter 220, image display LCD (Liquid Crystal Display) 230, a high-speed operation memory 240, image storage memory 250, control microcomputer 300, exposure control section 310, shutter 311, focus control section 320, zoom control section 330, flashing section 340, power control section 350, switch block 360, and status LCD 370 as well as the taking lens 130 shown FIG. 1. The digital camera 100 can be connected to an external device 500 such as a personal computer.

First, the switch block 360 will be described.

The switch block 360 includes a shutter switch which is turned on and off with the shutter button 120 shown in FIG. 1, a zoom switch which switches the field of view between wide angle and telephoto by moving the taking lens 130, a mode selection switch which switches recording mode between normal recording mode used to record photographic images and face image recording mode used to record facial images by extracting face portions of people contained in photographic images, an image display switch which displays photographic images on the image display LCD 230, a status switch which displays status of the digital camera 100 on the status LCD 370, and so on although these switches are not shown in the figure. The shutter switch is a two-stage switch: when the shutter button 120 is half pressed, the first stage of the switch actuates to lock the focus, and when the shutter button 120 is fully pressed, the second stage of the switch actuates to release the shutter 311.

Next, the components other than the switch block 360 will be described.

The image processor 200 performs image processing on a photographic image obtained by photographing a subject, and thereby measures the distance to the subject (distance measurement) and measures luminance (metering). Further, the image processor 200 performs predetermined image processing on a photographic image, such as gradation correction or white balance correction, and detects red eyes in the photographic image. Then, according to the recording mode, the image processor 200 performs a red-eye correction process for correcting the red eyes in the photographic image, a face recognition process for recognizing face portions included in the photographic image based on the red eyes, and a face extraction process for extracting the face portions from the photographic image having the corrected the red eyes. The red-eye correction process, face recognition process, and face extraction process will be described later in detail.

The CCD 211 receives light from a subject and converts the light into a subject signal which is an analog signal. The subject signal is output from the CCD 211 to the AD converter 220 at a timing generated by the timing generator 210. The AD converter 220 converts the subject signal acquired from the CCD 211 into photographic image data which is digital data.

The image display LCD 230 is a liquid-crystal monitor which displays images based on the image data received from the image processor 200. The high-speed operation memory 240 is a temporary memory used by the image processor 200 and the image storage memory 250 is a memory used to record the image data received from the image processor 200.

The control microcomputer 300 monitors the number of photographed images and battery level. Also, it acquires distance information and luminance information from the image processor 200 and determines the position of the focus lens to focus on a subject located in the central area of the field of view, position of the zoom lens in accordance with the zoom switch contained in the switch block 360, aperture which indicates the quantity of light entering the taking lens 130, shutter speed which indicates the time duration during which the CCD 211 receives light, and so on. Furthermore, it transmits information including the above described lens positions as well as operation instructions to the components shown in FIG. 2 according the settings of the switches in the switch block 360.

Upon acquiring the aperture and shutter speed information from the control microcomputer 300, the exposure control section 310 adjusts the aperture, controls the exposure for the CCD 211 to receive light from the subject, and releases the shutter 311 at the specified shutter speed by operating a motor attached to the shutter 311.

Upon acquiring information about the position of the focus lens from the control microcomputer 300, the focus control section 320 moves the focus lens to the specified focus lens position by operating the motor attached to the focus lens in the taking lens 130.

Upon acquiring information about the position of the zoom lens from the control microcomputer 300, the zoom control section 330 moves the zoom lens to the specified zoom lens position by operating the motor attached to the zoom lens in the taking lens 130.

Upon acquiring information about appropriate flash light quantity from the control microcomputer 300, the flashing section 340 emits a flash from the flash unit 140 shown in FIG. 1. The flash light quantity of the emitted flash is measured by the flash sensor 150 and the flashing stops when the appropriate flash light quantity is reached.

The power control section 350 controls the power supplied from a power source 400. The status LCD 370 is a liquid-crystal monitor which displays the number of photographed images, battery level, and other information acquired from the control microcomputer 300.

The digital camera 100 according to the present embodiment is configured basically as described above. As an embodiment of the present invention, the digital camera 100 is characterized by the red-eye correction process, face recognition process and face extraction process performed by the image processor 200. These processes will be described in detail below.

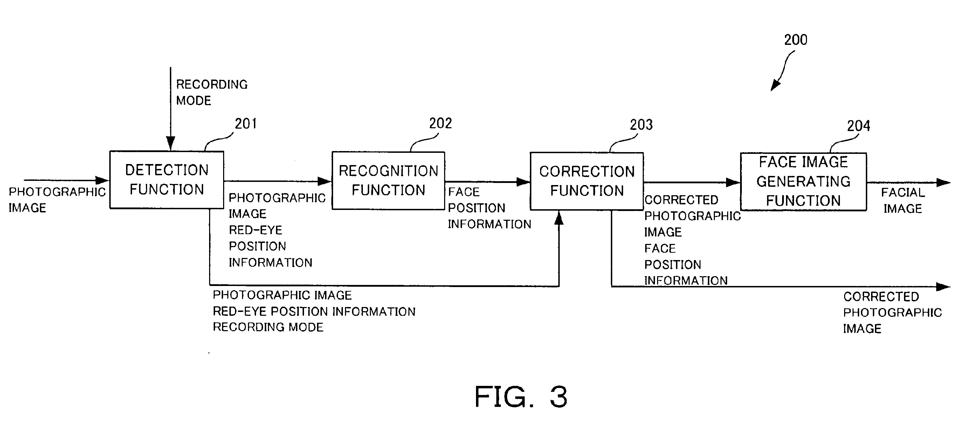

FIG. 3 is a functional block diagram showing functions related to the red-eye correction process, face recognition process and face extraction process of the image processor 200.

The image processor 200 has functions such as a detection function 201, recognition function 202, correction function 203, and face image generating function 204.

Upon receiving a digital photographic image from the AD converter 220 in FIG. 2, the detection function 201 detects red eyes in the photographic image by searching the photographic image for red, round image parts and generates position information about the detected red eyes. Red eyes are described as an example of the red-eye according to the present invention and an example of the eye portions which have undergone a predetermined color change. The detection function 201 is an example of functions of the detection section in the image pickup apparatus and face recognition apparatus according to the present invention.

The recognition function 202 recognizes the faces of the people contained in the photographic image based on the red-eye position information generated by the recognition function 202. Then, the recognition function 202 generates position information about the recognized faces. The recognition function 202 is an example of functions of the recognition section in the image pickup apparatus and face recognition apparatus according to the present invention.

Based on the photographic image and red-eye position information generated by the detection function 201, the correction function 203 lowers the color saturation of the image parts of red eyes in that photographic image to a predetermined value, corrects their color and brightness so that they become desirable eye color and brightness of typical people in a photograph, and generates the corrected photographic image. The correction function 203 is an example of functions of the correction section in the image pickup apparatus according to the present invention.

Upon acquiring the corrected photographic image generated by the correction function 203 and the face position information generated by the recognition function 202, the face image generating function 204 generates facial images by extracting the face images of people from the corrected photographic image. The face image generating function 204 is an example of functions of the face image generating section in the image pickup apparatus according to the present invention.

Basically, the image processor 200 has the above described functions related to the face recognition process and face extraction process.

Now, description will be given below of a series of procedures used by a photographer to photograph a subject and record a photographic image.

First, description will be given of an example in which the photographer selects the face image recording mode out of the recording modes and records a photographic image.

The photographer selects the face image recording mode out of the recording modes using a recording mode selection button (not shown).

When the photographer selects the face image recording mode, in the digital camera 100, the face image recording mode is set by the mode selection switch in the switch block 360 in FIG. 2 and the selected recording mode is reported to the control microcomputer 300. Upon being informed of the recording mode, the control microcomputer 300 notifies the image processor 200 of the selected recording mode.

Then, the photographer looks into the viewfinder 110 in FIG. 1, brings the desired subject into the central area of the field of view by moving the digital camera 100, and half presses the shutter button 120.

When the shutter button 120 shown in FIG. 1 is half pressed by the photographer, in the digital camera 100, the first stage of the shutter switch in the switch block 360 in FIG. 2 is activated and the control microcomputer 300 is informed about the activation of the first stage of the shutter switch.

Here, the image processor 200 acquires low-resolution photographic image data used for distance measurement and other processes. That is, the light from the subject received by the CCD 211 is converted into a low-resolution subject signal and sent to the AD converter 220. The low-resolution subject signal is converted by the AD converter 220 into a digital signal, i.e., the photographic image data, which is then sent to the image processor 200.

Using the low-resolution photographic image data, the image processor 200 calculates the luminance in the field of view (metering) and calculates the distance to the subject (distance measurement) by measuring the contrast of that part of the low-resolution photographic image data which corresponds to the central area. The results of calculations, i.e., luminance information and distance information, are sent to the control microcomputer 300.

Upon receiving the luminance information and distance information from the image processor 200, the control microcomputer 300 determines shutter speed and aperture based on the luminance information, and determines the position of the focus lens to focus on the subject based on the distance information. Also, the control microcomputer 300 sends focus lens position information to the focus control section 320 and retains the shutter speed and aperture until the shutter button 120 in FIG. 1 is fully pressed by the photographer.

Upon acquiring the focus lens position information from the control microcomputer 300, the focus control section 320 moves the focus lens to the focus lens position by operating the motor attached to the focus lens in the taking lens 130.

When the above-described series of processes (herein after referred to as "pre-photographing process") used for preparing photographing is finished, processes for an actual photographing which will be described below is started.

Here, the photographer fully presses the shutter button 120 shown in FIG. 1.

When the shutter button 120 is fully pressed, the second stage of the shutter switch in the switch block 360 in FIG. 2 is activated and the control microcomputer 300 is informed about the activation of the second stage of the shutter switch.

Upon being informed about the activation of the second stage of the shutter switch, the control microcomputer 300 sends information about the shutter speed and aperture to the exposure control section 310. Upon acquiring the information about the shutter speed and aperture from the control microcomputer 300, the exposure control section 310 releases the shutter 311 according to the specified shutter speed and aperture.

When the shutter 311 is released, the light from the subject received by the CCD 211 is converted into a high-resolution subject signal and sent to the AD converter 220. The subject signal is converted by the AD converter 220 into high-resolution photographic image data, which is then sent to the image processor 200.

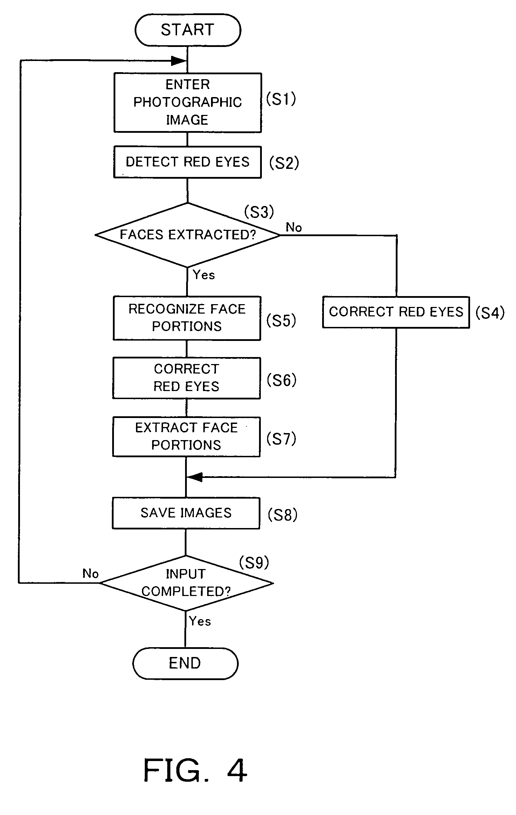

FIG. 4 is a flowchart showing a sequence of processes performed by the image processor 200 when a photographic image is sent to the image processor 200 and recorded in the image storage memory 250 shown in FIG. 2. Now, with reference to the flowchart of FIG. 4, description will be given of the sequence of processes performed from when the photographic image is sent to the image processor 200 to when the photographic image is recorded. In the description of FIG. 4, FIGS. 5 to 9 will be referred to as well.

The detection function 201 of the image processor 200 shown in FIG. 3 is informed by the control microcomputer 300 in FIG. 2 that the recording mode is set to the face image recording mode and receives the photographic image data from the AD converter 220 (step S1 in FIG. 4).

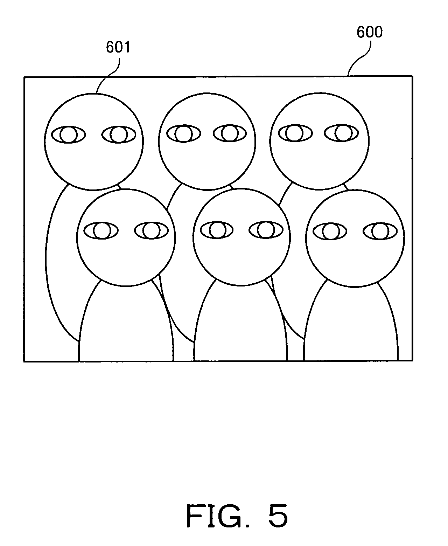

FIG. 5 is a diagram showing a photographic image which corresponds to the photographic image data inputted in the detection function 201. The photographic image 600 represents a group photograph containing some people 601. The digital camera 100 is designed to cause red-eye intentionally. Red-eye is observed in the eyes of all the people 601 contained in the photographic image 600. The red-eye occurs in flash photography. It is a phenomenon in which a strong flash light entering through open pupils and reflected by the capillaries at the back of the eye causes the eyes of the people in a photographic image to look red. The red-eye tends to occur when the lens and flash unit of a camera are close to each other. In the digital camera 100 of the present embodiment, the taking lens 130 and flash unit 140 are located extremely close to each other as shown in FIG. 1.

The detection function 201 in FIG. 3 detects red eyes in the photographic image 600 in FIG. 5 by searching the photographic image 600 for red, round image parts (step S2 in FIG. 4).

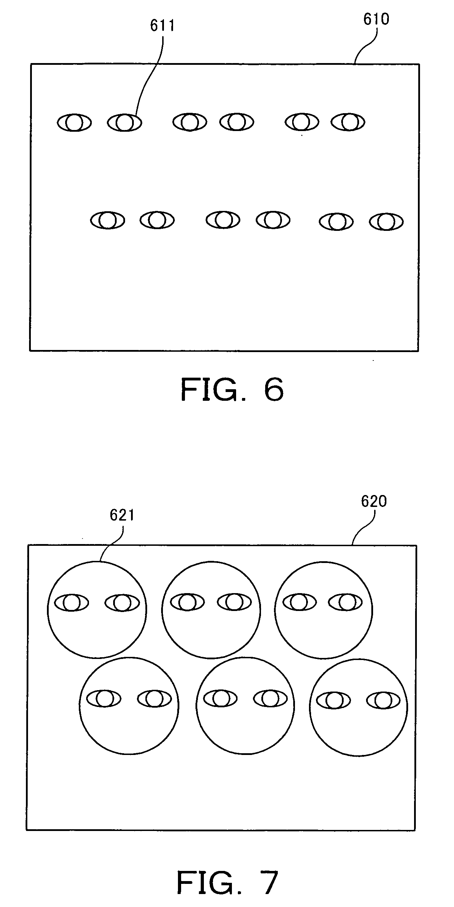

FIG. 6 is a diagram showing detection results of the red eyes contained in the photographic image 600. Since red-eye is observed in the eyes of all the people 601 contained in the photographic image 600 in FIG. 5, the red-eye detection results 610 contain the eyes 611 of all the people contained in the photographic image 600.

The detection function 201 in FIG. 3 generates red-eye position information which indicates the positions of the detected red eyes. Then, it sends the photographic image data, red-eye position information, and face image recording mode which is the current recording mode to the correction function 203. The detection function 201 also sends the photographic image data and red-eye position information to the recognition function 202. The process in step S2 performed by the detection function 201 is an example of the detection step in the face recognition method and face extraction method according to the present invention.

In the flowchart of FIG. 4, since the recording mode is set to the face image recording mode, the flow goes from step S3 to step S5.

Upon receiving the photographic image data and red-eye position information from the detection function 201, the recognition function 202 in FIG. 3 recognizes the faces of people in the photographic image which corresponds to the photographic image data, based on the red-eye position information (step S5 in FIG. 4).

FIG. 7 is a diagram showing results produced by recognizing the faces of the people contained in the photographic image 600 in FIG. 5 based on the red-eye detection results 610 in FIG. 6. The face recognition results 620 show that in the photographic image 600 in FIG. 5, objects around the eyes 611 indicated by the red-eye detection results 610 in FIG. 6 are recognized as faces 621.

The recognition function 202 in FIG. 3 generates face position information which indicates the positions of the recognized faces. Then, it sends the face position information to the correction function 203. The process in step S5 performed by the recognition function 202 is an example of the recognition step in the face recognition method and face extraction method according to the present invention.

Based on the photographic image data and red-eye position information received from the detection function 201, the correction function 203 corrects the red eyes in the photographic image by lowering the color saturation of the image parts indicated by the red-eye position information in the photographic image corresponding to the photographic image data (step S6 in FIG. 4).

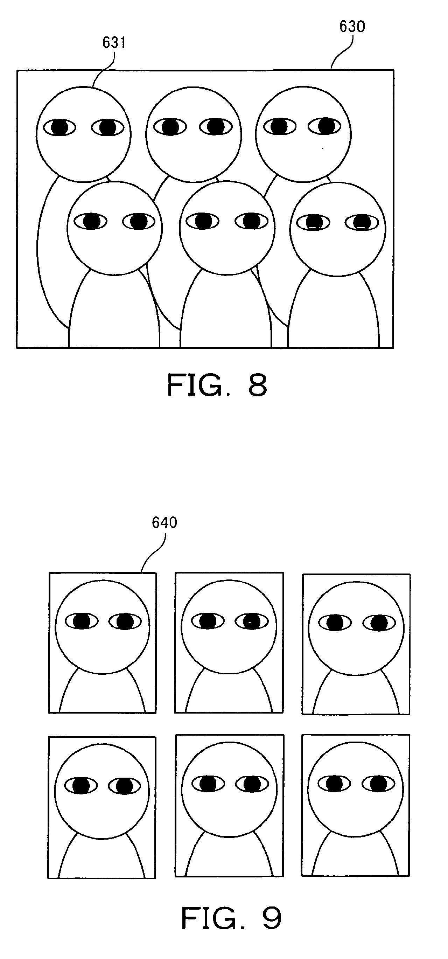

FIG. 8 is a diagram showing a corrected photographic image obtained after the red eyes contained in the photographic image 600 in FIG. 5 have been corrected based on the red-eye detection results 610 in FIG. 6. The red-eye observed in the eyes of the people 601 contained in the photographic image 600 in FIG. 5 has been corrected in the eyes of the people 631 contained in the corrected photographic image 630.

The correction function 203 in FIG. 3 sends corrected photographic image data of the corrected photographic image 630 to the face image generating function 204 together with the face position information received from the recognition function 202. The process in step S6 performed by the correction function 203 is an example of the correction step in the face extraction method according to the present invention.

Upon receiving the corrected photographic image data and face position information from the correction function 203, the face image generating function 204 generates facial images by extracting face portions indicated by the face position information from the corrected photographic image corresponding to the corrected photographic image data (step S7 in FIG. 4).

FIG. 9 is a diagram showing facial images 640 obtained by extracting image parts of faces from the corrected photographic image 630 in FIG. 8 based on the face recognition results 620 in FIG. 7. As shown in FIG. 9, the facial images 640 of all the people 601 contained in the photographic image 600 in FIG. 5 are generated, with the red eyes of the people in the facial images 640 being corrected.

The face image generating function 204 sends face image data based on the facial images to the image storage memory 250 shown in FIG. 2. The process in step S7 performed by the face image generating function 204 is an example of the face image generating step in the face extraction method according to the present invention.

The face image data is sent to and recorded in the image storage memory 250 (step S8 in FIG. 4).

The processes described above are repeated until the shooting finishes (step S9 in FIG. 4). This concludes the description of the example in which a photographic image is recorded in the face image recording mode.

As described above, it is possible to generate red-eyes, accurately recognize facial parts based on the generated red-eyes, and extract the facial parts without fault by the digital camera 100 of the present embodiment.

Next, description will be given of an example in which a photographic image is recorded in the normal recording mode.

The photographer selects the normal recording mode out of the recording modes using the recording mode selection button (not shown).

When the photographer selects the normal recording mode, in the digital camera 100, the normal recording mode is set by the mode selection switch in the switch block 360 in FIG. 2 and the selected recording mode is reported to the control microcomputer 300. As in the case of the face image recording mode described above, the control microcomputer 300 notifies the image processor 200 of the selected recording mode.

Then, as in the case of the face image recording mode, the photographer looks into the viewfinder 110 and half presses the shutter button 120 to lock the focus.

When the shutter button 120 shown in FIG. 1 is half pressed by the photographer, in the digital camera 100, a sequence of pre-photographing operations are performed, as in the case of the face image recording mode.

Then, the photographer fully presses the shutter button 120 in shown FIG. 1.

When the shutter button 120 is fully pressed, an actual photographing is performed as in the case of the face image recording mode and photographic image data of a photographic image is input in the image processor 200 shown in FIG. 2.

Now, description will be given using the flowchart in FIG. 4 as with the above example in which the face image recording mode is selected out of the recording modes.

The detection function 201 of the image processor 200 shown in FIG. 3 receives the photographic image data and is informed by the control microcomputer 300 in FIG. 2 that the recording mode is set to the normal recording mode (step S1 in FIG. 4). The detection function 201 detects red eyes and generates red-eye position information as in the case of the face image recording mode (step S2 in FIG. 4), but in this example, faces are not extracted (step S3 in FIG. 4), the photographic image and red-eye position information are not sent to the recognition function 202, and the photographic image and red-eye position information are sent only to the correction function 203 together with the information that the normal recording mode has been selected. Then, the flow goes to step S4 in the flowchart of FIG. 4.

Based on the photographic image data and red-eye position information received from the detection function 201, the correction function 203 corrects the red eyes in the photographic image as in the case of the face image recording mode (step S4 in FIG. 4). In this example, the correction function 203 sends the corrected photographic image data of the corrected photographic image obtained by correcting the red eyes contained in the photographic image directly to the image storage memory 250 shown in FIG. 2 instead of sending them to the face image generating function 204.

The corrected photographic image data is sent to the image storage memory 250 and recorded in it (step S8 in FIG. 4) as is the case with the face image data. The above processes are repeated until the shooting finishes (step S9 in FIG. 4).

As described above, according to the digital camera 100 of the present embodiment, it is possible to record images having the corrected red eyes and thus looking desirable to the eye even when the normal recording mode is selected.

Now, a second embodiment of the present invention will be described. Although a digital camera of the second embodiment has the same elements as those of the digital camera 100 according to the first embodiment, the time when red-eyes are detected in the second embodiment is different from that in the first embodiment. The second embodiment will be described referring to FIGS. 1 and 2 used to describe the first embodiment, by focusing on its features different from those of the first embodiment.

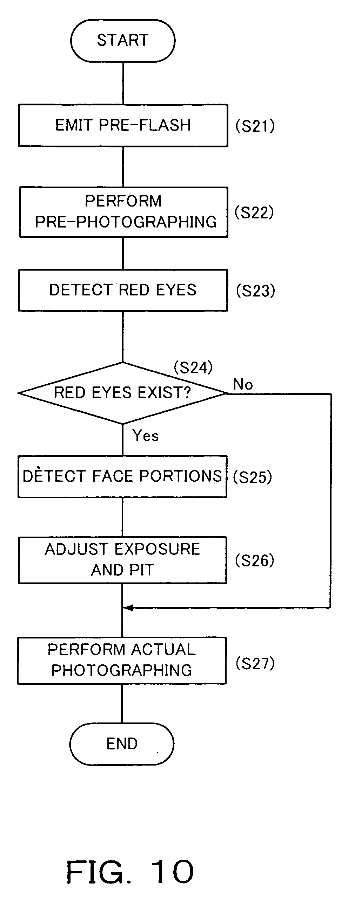

FIG. 10 is a flowchart showing a sequence of photographing processes performed by the digital camera of the present embodiment.

A photographer half presses the shutter button 120 after moving the digital camera 100 shown in FIG. 1 to let the camera faces a desired subject.

When the shutter button 120 is half pressed, in the digital camera 100, the first stage of the shutter switch in the switch block 360 is actuated. Then, the microcomputer 300 specifies flash light quantity and sends it to the flashing section 340. The flashing section 340 then emits a flash according to the specified flash light quantity using the flash unit 140 in FIG. 1 (step S21 in FIG. 10).

When the flash is emitted, like the first embodiment, the CCD 211 roughly receives light from the subject and generates low-resolution photographic image data (step S22 in FIG. 10). An image of the low-resolution photographic image data is similar to the photographic image 600 shown in FIG. 5, but a rough image.

The image processor 200 detects red eyes contained in the image of the low-resolution photographic image data (step S23 in FIG. 10), like step S2 in FIG. 4.

When the red eyes are detected, the process goes to step S25 in FIG. 10. The image processor 200 detects, like step S5 in FIG. 4, faces contained in the image of the low-resolution photographic image data (step S25 in FIG. 10) and generates face position information indicating the positions of the detected faces.

Subsequently, based on the low-resolution photographic image data, the image processor 200 calculates distance information and luminance information on the position indicated by the face position information (hereinafter referred to as "subject position"), and then, sends the information obtained by the calculation to the microcomputer 300.

Upon acquiring the distance information and luminance information from the image processor 200, the microcomputer 300 determines shutter speed and aperture based on the luminance information, and also determines the position of the focus lens to focus on the subject based on the distance information. According to the shutter speed, aperture and focus lens position thus determined, each element shown in FIG. 2 is adjusted (step S26 in FIG. 10).

When the pre-photographing process from step S21 to step S26 in FIG. 10 is finished, the photographer fully presses the shutter button 120 and an actual photographing process is executed (step S27 in FIG. 10) like step S1 in FIG. 4 described in the first embodiment.

The above distance information and luminance information are calculated by the image processor 200 such that the calculated information should correspond to the positions of the people whose faces are detected based on the red-eyes in the photographic image of the photographic image data. Therefore, by performing AF (focus adjustment), AE (exposure adjustment), and AWB (white balance correction), etc. based on the calculated distance information and luminance information, the detected people can be accurately focused on and photographing can be performed using desirable exposure. Also, if a digital camera capable of shooting moving images is used, it is possible to obtain a high-quality moving image that always focuses on a person by detecting the person beforehand in the pre-photographing as described above, and further, for example, by searching for the color of the detected person to be continuously photographed.

Also, in step S24 in FIG. 10, If red-eyes are not detected in the photographic image of the low-resolution photographic image data, it means that the photographic image contains no person. In this case, the process goes from step S24 to step S27, and an actual photographing is performed according to predetermined shutter speed, aperture and focus lens position.

Now, a third embodiment of the present invention will be described. The third embodiment is a system that includes an image pickup apparatus having the same structure as that of the digital camera 100 in the first embodiment, and identifies individuals contained in the photographic image taken by the image pickup apparatus.

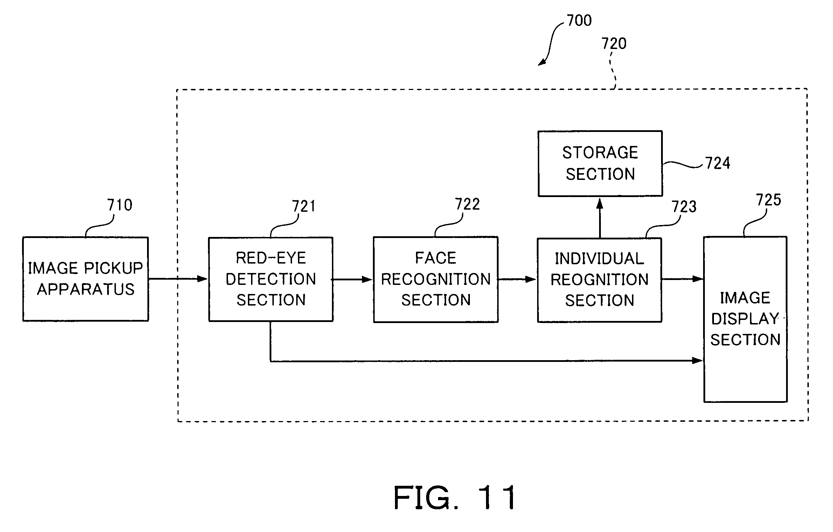

FIG. 11 is a functional block diagram showing an identification system 700 according to the third embodiment of the present invention.

The identification system 700 is comprised of an image pickup apparatus 710 and a personal computer 720 connected to the image pickup apparatus 710. The image pickup apparatus 710 has the same structure as that of the digital camera 100 shown in FIG. 2 in the first embodiment. The personal computer 720 is comprised of a red-eye detection section 721, a face recognition section 722, an individual recognition section 723, a storage section 724, and an image display section 725, each having its own function. The red-eye detection section 721 is an example of the detection section according to the present invention, and the face recognition section 722 is an example of the face recognition section according to the present invention. Face images of individuals and information associated with the individuals are stored in the storage section 724 beforehand.

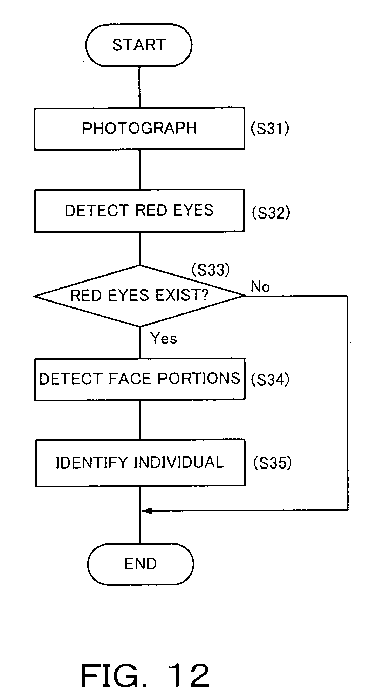

FIG. 12 is a flowchart showing a sequence of processes of identifying a person being photographed, based on a photographic image taken by the image pickup apparatus 710.

The image pickup apparatus 710 performs a sequence of photographing processes similar to that of the digital camera 100 in the first embodiment (step S1 in FIG. 4), and generates photographic image data representing a taken photographic image (step S31 in FIG. 12). In the image pickup apparatus 710, a flash unit and a lens are placed very closely just like the digital camera 100 in FIG. 1 so that red-eye phenomena can easily occur. The photographic image data generated by the image pickup apparatus 710 is sent to the red-eye detection section 721.

The red-eye detection section 721 detects red eyes contained in the photographic image of the received photographic image data, like the processes performed in step S2 in FIG. 4 and step S23 in FIG. 10 (step S32 in FIG. 12).

If red eyes are detected in the photographic image by the red-eye detection section 721 in step S33, the process goes to step S34. Upon receiving the photographic image data and red-eye position information from the red-eye detection section 721, the face recognition section 722 starts a face recognition process. The face recognition section 722 detects face portions of people contained in the photographic image, like the processes performed in step S4 in FIG. 4 and step S25 in FIG. 10 (step S34 in FIG. 12). Then, the face recognition section 72 sends the face portion images of the detected face portions to the individual recognition section 723.

The individual recognition section 723 searches for face images that match the received face portion images through the face images stored in the storage section 724 so as to identify individuals corresponding to the face images. The individual identification process performed here can be any of widely used conventional techniques, and thus the detailed description will be omitted. Subsequently, the individual recognition section 723 acquires information about the individuals who are associated with the face images obtained by the search (step S35 in FIG. 12). Then, the information about the individuals and their face images acquired by the individual recognition section 723 are sent to the image display section 725 and displayed on a display screen (not shown).

If red eyes are not detected in the photographic image in step S33 in FIG. 12, steps S34 and S35 are skipped, and thus the individual identification process is not performed. In this case, the image display section 725 receives the photographic image from the red-eye detection section 721 and displays the received photographic image together with a message saying "No identified individuals" on the display screen (not shown).

A widely used conventional type of individual identification system, which identifies individuals based on photographic images obtained by photographing persons, has a problem that disables the system. Specifically, for example, when an object like a photograph of a person or a mask is placed in front of the camera, the individual identification is performed based on a photographic image including such an object. That is, the identification in this example may be completed even if the identified person' s face is a face in a picture or a mask. On the other hand, as for the individual identification system according to the present invention, only persons having red-eyes in a photographic image are identified whereas persons having no red-eyes like those of an object placed in front of the camera are not identified, and thus an error message is output. Accordingly, if the individual identification system of the present invention is applied to a security system, such a security system can be highly reliable.

The digital camera, face recognition method, and face extraction method described above recognize faces by detecting red eyes in a photographic image. However, the image pickup apparatus, face recognition method and apparatus, and face extraction method according to the present invention may be configured differently as long as they recognize faces by detecting eye portions which have undergone a predetermined color change in an image. For example, they may recognize faces by detecting gold eyes in a photographic image.

Although in the examples described above, a digital camera was used as an example of the image pickup apparatus according to the present invention, the image pickup apparatus may be other apparatus such as a small camera included in a mobile phone.

In addition, the examples described above detect eyes in a photographic image that is photographed using visible light emitted from a flash unit. However, the image pickup apparatus, face recognition method and apparatus, face extraction method according to the present invention may detect eyes in a photographic image photographed using light other than the visible light, such as infrared light emitted from a flash unit. If the infrared light is used, it is possible to detect eyes in a photographic image more easily.

## Claims

1. A face recognition method for recognizing face portions in an image based on image data of the image, comprising:
a detection step of detecting, in the image, eye portions which have undergone a predetermined color change, based on the image data; and
a recognition step of recognizing face portions in the image based on the eye portions detected in the detection step.

2. The face recognition method according to claim 1, wherein the detection step detects red-eye portions in the image.

3. A face recognition apparatus which recognizes face portions in an image based on image data of the image, comprising:
a detection section which detects, in the image, eyes which have undergone a predetermined color change, based on the image data; and
a recognition section which recognizes face portions in the image based on the eyes detected by the detection section.

4. A face extraction method for extracting face portions from an image and generating facial images based on image data of the image, comprising:
a detection step of detecting, in the image, eye portions which have undergone a predetermined color change, based on the image data;
a recognition step of recognizing face portions in the photographic image based on the eye portions detected in the detection step;
a correction step of correcting the color change in the eye portions detected in the detection step; and
a face image generating step of generating facial images by extracting, from the image, the face portions which have been recognized in the recognition step and whose color change has been corrected in the correction step.

5. A face extraction method for extracting face portions from an image and generating facial images based on image data of the image, comprising:
a detection step of detecting red-eye portions in the image, based on the image data;
a recognition step of recognizing face portions in the image based on the red-eye portions detected in the detection step;
a correction step of correcting the red-eye portions detected in the detection step; and
a face image generating step of generating facial images by extracting, from the image, the face portions which have been recognized in the recognition step and whose red-eye portions have been corrected in the correction step.

6. An image pickup apparatus which photographs a subject and generates photographic image data of a photographic image, comprising:
a detection section that detects, in the photographic image, eye portions which have undergone a predetermined color change, based on the image data;
a recognition section that recognizes face portions in the photographic image based on the eye portions detected by the detection section;
a correction section that corrects the color change in the eye portions detected by the detection section; and
a face image generating section that generates facial images by extracting, from the photographic image, the face portions which have been recognized by the recognition section and whose color change has been corrected by the correction section.

7. The image pickup apparatus according to claim 6, wherein the detection section detects red-eye portions in the image and the correction section corrects the red-eye portions detected by the detection section.
